# EUROPEAN PATENT APPLICATION

(11) **EP 4 488 247 A1**
(43) Date of publication of application: **08.01.2025**
(21) Application number: 23763448.0
(22) Date of filing: 28.02.2023
(51) Int. Cl.: C04B 41/87, C04B 35/569, C04B 35/80

(54) **SILICON CARBIDE CERAMIC AND PRODUCTION METHOD THEREFOR**

(30) Priority: 02.03.2022 JP 2022031961
(71) Applicant: Kyoto University, Kyoto-shi, Kyoto 606-8501 (JP)
(72) Inventor: HINOKI, Tatsuya, Kyoto-shi, Kyoto 606-8501 (JP); SAKAI, Hiroyuki, Kyoto-shi, Kyoto 606-8501 (JP)
(74) Representative: Gevers & Orès
(86) International application number: PCT/JP2023/007335
(87) International publication number: WO 2023/167191

(57) **Abstract**

Disclosed herein is novel silicon carbide ceramics having excellent durability. The silicon carbide ceramics comprises a silicon carbide ceramic substrate and a coating layer coating a surface of the silicon carbide ceramic substrate, wherein (1) the coating layer contains a silicate that is a product of a eutectic reaction between silicon dioxide derived from the silicon carbide ceramic substrate, a metal oxide derived from the silicon carbide ceramic substrate, and a metal oxide derived from a coating layer precursor, and (2) a content of the silicate in the coating layer is 80 vol% or more.

## Description

### Technical Field

The present disclosure relates to silicon carbide ceramics and a method for producing the same.

### Background Art

Among engineering ceramics, practical use of a silicon carbide (SiC) matrix has been promoted for its high physical and chemical durability. Particularly, for the purpose of further enhancing the durability of such an SiC matrix, composites containing SiC ceramics and SiC fiber arranged in the SiC ceramics have been developed. Such composites are considered to be usable in a harsh environment exceeding 1000°C. Therefore, ceramic matrix composites (CMCs) have heretofore received attention and been used in the fields of aircraft engines, spacecraft engines, nuclear power reactors, and the like.

However, in a harsh high-temperature environment in an aircraft engine, a high-pressure turbine member, or the like, an SiC matrix is oxidized by oxygen and water vapor so that silicon dioxide (SiO₂) is generated on the surface thereof, but the thickness of SiO₂ is reduced by reaction with water vapor.

As a known measure against surface deterioration, for example, a protective coating such as an environmental barrier coating (EBC) is applied onto the surface of an SiC matrix. For example, as such a measure, a technique is known in which an SiC matrix (sintered product) is produced and then further heated to form, as a coating film, a surface modification layer, which contains a silicate derived from a metal oxide contained in the matrix, near the surface of the matrix by utilizing a phenomenon in which the metal oxide is diffused to the surface (Patent Literature 1). Such a technique uses a metal oxide contained in the matrix and therefore can be said to be preferred in terms of the fact that it has a self-forming property or a self-healing property such that a new coating film is formed without externally supplying a material. However, the coating film obtained by such a method is very thin. Further, when the sintered product is continued to be heated for the purpose of increasing the thickness of the coating film, the amount of SiO₂ in the coating film is increased, and therefore the proportion of the silicate in the coating film (compactness) is relatively reduced, which causes surface deterioration. Therefore, it is important to provide novel SiC ceramics that can be used in a harsh environment.

### Citation List

### Patent Literature

PTL 1: WO 2018/212139 A

### Summary of Invention

### Technical Problem

It is an object of the present disclosure to provide novel silicon carbide ceramics having excellent durability.

### Solution to Problem

The present inventors have intensively studied and, as a result, have found that when, in production of silicon carbide ceramics, a coating layer precursor containing a metal oxide is applied onto the surface of a sintered product containing silicon carbide and a metal oxide, and then the sintered product and the coating layer precursor are heat-treated at a temperature equal to or higher than a eutectic temperature between silicon dioxide derived from the sintered product, the metal oxide derived from the sintered product, and the metal oxide derived from the coating layer precursor, the coating layer precursor can be converted to a coating layer containing a silicate, which makes it possible to form a coating layer containing a high proportion of a silicate (i.e., having high compactness) on the surface of a silicon carbide ceramic substrate. The present invention has been completed by further conducting studies on the basis of this finding, and the present disclosure includes, for example, inventions typified by the following.

Item 1. Silicon carbide ceramics comprising a silicon carbide ceramic substrate and a coating layer coating a surface of the silicon carbide ceramic substrate, wherein
(1) the coating layer contains a silicate that is a product of a eutectic reaction between silicon dioxide derived from the silicon carbide ceramic substrate, a metal oxide derived from the silicon carbide ceramic substrate, and a metal oxide derived from a coating layer precursor, and
(2) a content of the silicate in the coating layer is 80 vol% or more.

Item 2. The silicon carbide ceramics according to item 1, wherein each of the metal oxides is at least one selected from the group consisting of scandium oxide (Sc₂O₃), yttrium oxide (Y₂O₃), erbium oxide (Er₂O₃), ytterbium oxide (Yb₂O₃), alumina (Al₂O₃), hafnium oxide (HfO₂), and lutetium oxide (Lu₂O₃).

Item 3. The silicon carbide ceramics according to item 1 or 2, wherein the coating layer has a thickness of 10 µm or more.

Item 4. The silicon carbide ceramics according to any one of items 1 to 3, wherein the silicon carbide ceramic substrate contains ceramic fiber.

Item 5. The silicon carbide ceramics according to any one of items 1 to 4, wherein a content of the metal oxide in the coating layer precursor is 40 to 100 mass%.

Item 6. The silicon carbide ceramics according to any one of items 1 to 5, wherein the silicate is at least one selected from the group consisting of scandium silicate (Sc₂Si₂O₇), yttrium silicate (Y₂SiO₅), erbium silicate (Er₂SiO₅), ytterbium silicate (Yb₂SiO₅), ytterbium silicate (Yb₂Si₂O₇), aluminum silicate (Al₂SiO₅), lutetium silicate (Lu₂SiO₅), lutetium silicate (Lu₂SiO₇), and hafnium silicate (HfSiO₄).

Item 7. A method for producing silicon carbide ceramics comprising a silicon carbide ceramic substrate and a coating layer coating a surface of the silicon carbide ceramic substrate, the method comprising:
(A) dispersing at least a silicon carbide-forming raw material and a metal oxide in a dispersion medium;
(B) sintering a dispersion product obtained in step (A); and
(C) applying a coating layer precursor containing a metal oxide onto a surface of a sintered product obtained in step (B) and then heat-treating the sintered product and the coating layer precursor at a temperature equal to or higher than a eutectic temperature between silicon dioxide derived from the sintered product, the metal oxide derived from the sintered product, and the metal oxide derived from the coating layer precursor to convert the coating layer precursor to a coating layer containing a silicate.

Item 8. The method for producing silicon carbide ceramics according to item 7, wherein each of the metal oxides is at least one selected from the group consisting of scandium oxide (Sc₂O₃), yttrium oxide (Y₂O₃), erbium oxide (Er₂O₃), ytterbium oxide (Yb₂O₃), alumina (Al₂O₃), hafnium oxide (HfO₂), and lutetium oxide (Lu₂O₃).

Item 9. The method for producing silicon carbide ceramics according to item 7 or 8, wherein the coating layer has a thickness of 10 µm or more.

Item 10. The method for producing silicon carbide ceramics according to any one of items 7 to 9, wherein a content of the metal oxide in the coating layer precursor is 40 to 100 mass%.

Item 11. The method for producing silicon carbide ceramics according to any one of items 7 to 10, wherein the silicate is at least one selected from the group consisting of scandium silicate (Sc₂Si₂O₇), yttrium silicate (Y₂SiO₅), erbium silicate (Er₂SiO₅), ytterbium silicate (Yb₂SiO₅), ytterbium silicate (Yb₂Si₂O₇), aluminum silicate (Al₂SiO₅), lutetium silicate (Lu₂SiO₅), lutetium silicate (Lu₂SiO₇), and hafnium silicate (HfSiO₄).

Item 12. The method for producing silicon carbide ceramics according to any one of items 7 to 11, wherein in step (C), 0.01 to 0.5 g of the coating layer precursor in a powder form is applied per square centimeter of the surface of the sintered product where a coating layer needs to be formed.

Item 13. The method for producing silicon carbide ceramics according to any one of items 7 to 12, further comprising, after step (B) and before step (C), (C') heating a sintered product obtained in step (B) at 1000 to 1600°C for 10 minutes to 10 hours.

### Advantageous Effects of Invention

The present disclosure makes it possible to provide silicon carbide ceramics comprising a silicon carbide ceramic substrate and a coating layer coating a surface of the silicon carbide ceramic substrate and containing a high proportion of a silicate. The present disclosure makes it possible to produce silicon carbide ceramics having excellent durability.

### Brief Description of Drawings

Fig. 1 shows schematic diagrams of production process of silicon carbide ceramics (Example 1) and scanning electron microscopical (SEM) images of surface of the silicon carbide ceramics (Example 1).
Fig. 2 shows a SEM image of cross-section of the silicon carbide ceramics (Example 1) (left) and the result of elemental mapping by energy dispersive X-ray spectroscopy (EDS) (right).
Fig. 3 shows a SEM image of cross-section of the silicon carbide ceramics (Example 1).
Fig. 4 shows schematic diagrams of production process of silicon carbide ceramics (Comparative Example 1) and SEM images of surface of the silicon carbide ceramics (Comparative Example 1) .
Fig. 5 shows a SEM image of cross-section of the silicon carbide ceramics (Comparative Example 1) (left) and the result of EDS (right).
Fig. 6 shows a SEM image of cross-section of silicon carbide ceramics (Example 2).
Fig. 7 shows a SEM image of cross-section of silicon carbide ceramics (Comparative Example 2) produced using a silicon carbide ceramic substrate not containing a metal oxide.

### Description of Embodiments

Hereinbelow, embodiments included in the present disclosure will be described in more detail. It should be noted that in the present disclosure, the term "comprising" also includes the meanings of "consisting essentially of" and "consisting of".

### 1. Silicon carbide ceramics

The present disclosure includes silicon carbide ceramics comprising a silicon carbide ceramic substrate and a coating layer coating a surface of the silicon carbide ceramic substrate, wherein
(1) the coating layer contains a silicate that is a product of a eutectic reaction between silicon dioxide (SiO₂) derived from the silicon carbide ceramic substrate, a metal oxide derived from the silicon carbide ceramic substrate, and a metal oxide derived from a coating layer precursor, and
(2) a content of the silicate in the coating layer is 80 vol% or more.

In the present disclosure, the silicon carbide ceramics comprises a silicon carbide ceramic substrate and a coating layer coating a surface of the silicon carbide ceramic substrate. The silicon carbide ceramic substrate is a sintered product containing silicon carbide as a matrix. As will be described later, the matrix contains a metal oxide and may contain silicon carbide fiber or the like.

The content of SiC in the silicon carbide ceramic substrate is not limited, and is, for example, 20 to 99.9 mass%, preferably 30 to 99.5 mass%, more preferably 35 to 95 mass%.

As described above, the silicon carbide ceramic substrate constituting the silicon carbide ceramics contains SiC as a matrix and a metal oxide.

The metal oxide is not limited as long as it is an oxide of a metal, and preferred examples of the metal oxide include a rare-earth oxide represented by RE₂O₃ (RE denotes a rare-earth), an oxide of aluminum, and an oxide of hafnium.

Examples of the rare-earth include Yb, Sc, Y, Er, Lu, La, Ce, Pr, Nd, Pm, Sm, Eu, Gd, Tb, Dy, Ho, and Tm, and preferred examples of the rare-earth include Yb, Sc, Y, Er, and Lu. Preferred examples of RE₂O₃ include ytterbium oxide (Yb₂O₃), scandium oxide (Sc₂O₃), yttrium oxide (Y₂O₃), erbium oxide (Er₂O₃), and lutetium oxide (Lu₂O₃). A preferred example of the oxide of aluminum is alumina (Al₂O₃). A preferred example of the oxide of hafnium is hafnium oxide (HfO₂).

More preferred examples of the metal oxide include ytterbium oxide (Yb₂O₃), scandium oxide (Sc₂O₃), yttrium oxide (Y₂O₃), erbium oxide (Er₂O₃), lutetium oxide (Lu₂O₃), alumina (Al₂O₃), and hafnium oxide (HfO₂). More preferred examples of the metal oxide include ytterbium oxide (Yb₂O₃), scandium oxide (Sc₂O₃), yttrium oxide (Y₂O₃), erbium oxide (Er₂O₃), lutetium oxide (Lu₂O₃), and alumina (Al₂O₃).

These may be used singly or in combination of two or more of them.

The content of the metal oxide in the silicon carbide ceramic substrate is not limited, and is, for example, 0.1 to 30 mass%, preferably 0.5 to 25 mass%, more preferably 5 to 20 mass%.

The silicon carbide ceramic substrate may contain any other components without impairing the effects of the present disclosure. Examples of the components include ceramic fiber, disperse particles for improving strength characteristics, etc. These may be used singly or in combination of two or more of them, and the content of each of the components may appropriately be determined according to intended use.

Although not limiting the present disclosure, ceramic fiber will be described as an example of the other components. Examples of the ceramic fiber include SiC fiber, carbon fiber (C fiber), and alumina fiber, and a preferred example of the ceramic fiber is SiC fiber.

The ceramic fiber may appropriately be selected according to intended use or desired mechanical strength. For example, any one of filament fiber that is continuous ceramic fiber, short fiber (length: about 1 to 10 mm), and whisker may be used. From the viewpoint of improving the fracture toughness of the silicon carbide ceramics, for example, filament fiber is preferably used as ceramic fiber. These fibers are defined by meanings common to this field, and the meanings are based on the publicly-known conventional definitions of filament fiber, short fiber, and whisker (JIS "H7006-1991 Glossary of terms used in metal matrix composites"). The diameter of the ceramic fiber is not limited, either, and is, for example, preferably about 5 to 200 µm.

The ceramic fiber is commercially available. For example, silicon carbide fibers are commercially available under the brand names of Tyranno SA (manufactured by UBE Corporation) and Hi-Nicalon Type S (manufactured by NGS Advanced Fibers Co., Ltd.). Further, for example, alumina fibers are commercially available under the brand names of Nextel 312 and Nextel 440 (manufactured by Sumitomo 3M Limited) . The diameter etc. of commercially-available ceramic fiber is based on those described in the brochure of the commercially-available ceramic fiber.

When the silicon carbide ceramic substrate contains ceramic fiber, the form of the ceramic fiber in the substrate is not limited, either. Ceramic fiber is usually handled as a bundle of about 500 to 2000 fibers, and therefore the ceramic fiber contained in the substrate may be in the form of such a bundle or in the form of a fiber structure using the bundle, such as a knit fabric or a woven fabric. From the viewpoint of efficiently producing a ceramic fiber-reinforced composite material, the ceramic fiber to be used is, for example, preferably ceramic fiber in the form of a fiber structure. The ceramic fiber may directly be used or may be coated with any material such as boron nitride (BN) (coated ceramic fiber).

In the present disclosure, only one type of ceramic fiber may be used or two or more types of ceramic fibers may be used in combination.

When the silicon carbide ceramic substrate contains ceramic fiber, the content of the ceramic fiber in the silicon carbide ceramic substrate is not limited and is, for example, 70 mass% or less, preferably 10 to 70 mass%, more preferably 20 to 60 mass%, even more preferably 25 to 55 mass%.

The silicon carbide ceramics of the present disclosure includes a coating layer coating the surface of the silicon carbide ceramic substrate. The coating layer may coat the entire surface of the substrate or may coat part of the surface of the substrate, either of which may appropriately be selected according to intended use.

The coating layer contains a silicate that is a product of a eutectic reaction between silicon dioxide (SiO₂) derived from the silicon carbide ceramic substrate, a metal oxide derived from the substrate, and a metal oxide derived from a coating layer precursor.

The "silicon dioxide (SiO₂) derived from the silicon carbide ceramic substrate" will be described as follows. As can be seen from Examples that will be described later, it can be said that by oxidizing a sintered product obtained by sintering a dispersion product, silicon dioxide (SiO₂) is present on the surface of the sintered product. Therefore, the SiO₂ derived from the silicon carbide ceramic substrate means SiO₂ present on the surface of the sintered product.

The coating layer precursor contains a metal oxide. The metal oxide is the same as the above-described metal oxide usable for the silicon carbide ceramic substrate. Although not limiting the present disclosure, more preferred examples of the metal oxide contained in the coating layer precursor include ytterbium oxide (Yb₂O₃), scandium oxide (Sc₂O₃), yttrium oxide (Y₂O₃), erbium oxide (Er₂O₃), lutetium oxide (Lu₂O₃), alumina (Al₂O₃), and hafnium oxide (HfO₂).

The metal oxide contained in the coating layer precursor is, for example, preferably of the same type as the metal oxide used for the substrate. That is, when a rare-earth oxide is used for the substrate, a rare-earth oxide contained in the coating layer precursor is, for example, preferably of the same type as the rare-earth oxide used for the substrate. When an oxide of hafnium is used for the substrate, an oxide of hafnium contained in the coating layer precursor is, for example, preferably of the same type as the oxide of hafnium used for the substrate. When an oxide of aluminum is used for the substrate, an oxide of aluminum contained in the coating layer precursor is, for example, preferably of the same type as the oxide of aluminum used for the substrate.

Therefore, examples of a preferred combination of metal oxides include: a combination of a rare-earth oxide used for the substrate and a rare-earth oxide used for the coating layer precursor which is of the same type as that used for the substrate; a combination of an oxide of hafnium used for the substrate and an oxide of hafnium used for the coating layer precursor which is of the same type as that used for the substrate; and a combination of an oxide of aluminum used for the substrate and an oxide of aluminum used for the coating layer precursor which is of the same type as that used for the substrate.

Although not limiting the present disclosure, examples of a preferred combination of metal oxides include: a combination of a rare-earth oxide used for the substrate, a rare-earth oxide used for the coating layer precursor which is of the same type as that used for the substrate, and an oxide of aluminum used for the coating layer precursor; a combination of a rare-earth oxide used for the substrate, an oxide of aluminum used for the substrate, and a rare-earth oxide used for the coating layer precursor which is of the same type as that used for the substrate; and a combination of a rare-earth oxide and an oxide of aluminum used for the substrate and a rare-earth oxide and an oxide of aluminum used for the coating layer precursor which are of the same types as those used for the substrate.

Although not limiting the present disclosure, examples of a preferred combination of metal oxides include: a combination of an oxide of hafnium used for the substrate, an oxide of hafnium used for the coating layer precursor which is of the same type as that used for the substrate, and an oxide of aluminum used for the coating layer precursor; a combination of an oxide of hafnium and an oxide of aluminum used for the substrate and an oxide of hafnium used for the coating layer precursor which is of the same type as that used for the substrate; and a combination of an oxide of hafnium and an oxide of aluminum used for the substrate and an oxide of hafnium and an oxide of aluminum used for the coating layer precursor which are of the same types as those used for the substrate.

In these combinations, particularly preferred examples of the rare-earth oxide include at least one selected from the group consisting of ytterbium oxide (Yb₂O₃), scandium oxide (Sc₂O₃), yttrium oxide (Y₂O₃), erbium oxide (Er₂O₃), and lutetium oxide (Lu₂O₃), a particularly preferred example of the oxide of hafnium is hafnium oxide (HfO₂), and a particularly preferred example of the oxide of aluminum is alumina (Al₂O₃).

The content of the metal oxide in the coating layer precursor is not limited, and is, for example, 40 to 100 mass%, preferably 50 to 100 mass%, more preferably 60 to 100 mass% or 70 to 100 mass%.

The amount of an oxide of aluminum contained in the coating layer precursor is, but not limited to, for example, 0 to 1/2 parts by mass, preferably 1/20 to 2/5 parts by mass or 1/10 to 2/5 parts by mass per one part by mass (total amount) of at least one selected from the group consisting of a rare-earth oxide and an oxide of hafnium.

If necessary, the coating layer precursor may contain any other components without impairing the effects of the present disclosure. Examples of the components include a reaction aid for promoting formation of a silicate, etc. These may be used singly or in combination of two or more of them, and the content of each of the components may appropriately be determined according to intended use. It should be noted that there is a case where the metal oxide can be used as a reaction aid, but in the present disclosure, the content of the metal oxide is not included in the content of a reaction aid.

Although not limiting the present disclosure, the coating layer precursor is preferably composed of, for example, a metal oxide, and is more preferably composed of, for example, a rare-earth oxide and an oxide of aluminum or of, for example, a rare-earth oxide.

The coating layer precursor is in the form of powder (dried product). As will be described later, the coating layer precursor is applied onto the surface of the sintered product (substrate). The coating layer precursor may be formed by applying a powdery material (coating layer precursor) or by applying a material prepared in the form of slurry to enhance handleability (coatability) and then drying the material to obtain a powdery coating layer precursor.

The coating layer contains a silicate that is a product of a eutectic reaction between SiO₂ derived from the silicon carbide ceramic substrate, a metal oxide contained in the coating layer precursor, and a metal oxide contained in the silicon carbide ceramic substrate. The eutectic reaction occurs on the surface of the silicon carbide ceramic substrate. As will be described later, when the coating layer precursor is applied onto the surface of the sintered product, a eutectic reaction occurs between SiO₂ present on the surface of the sintered product, a metal oxide contained in the coating layer precursor, and a metal oxide contained in the silicon carbide ceramic substrate. As a result of the eutectic reaction, a silicate derived from the metal oxides is generated.

As described above, the silicate in the coating layer is not limited as long as it is derived from the coating layer precursor and the substrate. Although not limiting the present disclosure, the coating layer preferably contains, for example, at least one selected from among RE₂SiO₅, RE₂SiO₇, a silicate of hafnium, and a silicate of aluminum as a silicate. More preferred examples of the silicate include scandium silicate (Sc₂Si₂O₇), yttrium silicate (Y₂SiO₅), erbium silicate (Er₂SiO₅), ytterbium silicate (Yb₂SiO₅), ytterbium silicate (Yb₂Si₂O₇), aluminum silicate (Al₂SiO₅), lutetium silicate (Lu₂SiO₅), lutetium silicate (Lu₂SiO₇), and hafnium silicate (HfSiO₄). Even more preferred examples of the silicate include Yb₂SiO₅, Yb₂Si₂O₇, Lu₂SiO₅, Lu₂SiO₇, and HfSiO₄. These may be contained singly or in combination of two or more of them.

The content of the silicate in the coating layer used in the present disclosure is 80 vol% or more. The content of the silicate in the coating layer is, for example, preferably 85 to 100 vol%, more preferably 90 to 100 vol%. The content of the silicate in the coating layer used in the present disclosure may be 80 to 99 vol%, 80 to 98 vol%, 80 to 95 vol%, or 80 to 90 vol%. It can be said that when the content of the silicate is higher, the compactness of the coating layer is higher, which is effective at preventing surface deterioration in a high-temperature oxidative environment. Particularly, the present disclosure makes it possible to significantly reduce the SiO₂ content in the coating layer while increasing the content of the silicate, which can be said to be effective at preventing surface deterioration in a high-temperature oxidative environment. Therefore, gas (carbon dioxide) is prevented from remaining in the coating layer used in the present disclosure.

In the present disclosure, the content of the silicate in the coating layer is determined according to Examples that will be described later. Specifically, the composition in the coating layer is analyzed by observation of cross-sectional image of the coating layer with a scanning electron microscope and elemental mapping using energy dispersive X-ray spectroscopy (EDS) to identify the silicate in the coating layer, the percentage of volume of the silicate in the coating layer in a predetermined range is calculated from image analysis, and the average of calculated values is defined as the content of the silicate in the coating layer constituting the silicon carbide ceramics. The predetermined range means a square that has one side defined by the thickness of the coating layer (in a direction (perpendicular to the substrate surface) in which the coating layer is formed on the substrate) at any position in the cross-sectional image and that has another side defined by a straight line having the same length as the thickness and being parallel to the substrate surface in the cross-sectional image. The percentage of volume of the silicate in the coating layer in the square is calculated from image analysis. The percentage of volume of the silicate in the coating layer in the square is calculated at any other position in the same manner. The average of the percentages obtained at two positions is defined as the percentage of volume of the silicate in the coating layer constituting the silicon carbide ceramics.

In the present disclosure, the thickness of the coating layer is not limited and may appropriately be determined according to intended use. The lower limit of thickness of the coating layer is, for example, preferably 5 um, more preferably 10 µm, 15 µm, 20 µm, 35 um, or 40 um. The upper limit of thickness of the coating layer is, for example, preferably 180 µm, 150 µm, or 130 um. As descried above, the thickness of the coating layer is, for example, preferably any value in the range of 5 to 180 µm, and may be, for example, 10 to 100 µm or 10 to 150 µm.

In the present disclosure, the thickness of the coating layer is determined according to Examples that will be described later. Specifically, the composition in the coating layer is analyzed by observation of cross-sectional image of the coating layer with a scanning electron microscope and elemental mapping using energy dispersive X-ray spectroscopy (EDS) to identify the coating layer, the thickness of the coating layer (in a direction (perpendicular to the substrate surface) in which the coating layer is formed on the substrate ) is measured at any 10 positions on the image, and the average of measured values is defined as the thickness of the coating layer constituting the silicon carbide ceramics.

Although not limiting the present disclosure, the coating layer is, for example, preferably one having a silicate content of 80 vol% or more and a thickness of 5 µm or more, more preferably one having a silicate content of 90 to 100 vol% and a thickness of 10 to 100 µm, one having a silicate content of 80 to 100 vol% and a thickness of 10 to 150 µm, one having a silicate content of 80 to 98 vol% and a thickness of 10 to 150 µm, or one having a silicate content of 80 to 98 vol% and a thickness of 10 to 120 µm. The content and the thickness are the same as those described above. Preferably, the content and the thickness may appropriately be adjusted to fall within their respective ranges described above.

The coating layer is not limited as long as the silicate is contained in such a manner as described above, but may contain various components derived from the coating layer precursor without impairing the effects of the present disclosure. Examples of such components include unreacted raw materials (e.g., unreacted metal oxides).

The silicon carbide ceramics of the present disclosure can be produced by providing a coating layer on the surface of a silicon carbide ceramic substrate in such a manner as described above. Although not limiting the present disclosure, the silicon carbide ceramics of the present disclosure can be produced according to a production method that will be described below.

### 2. Method for producing silicon carbide ceramics

The present disclosure includes a method for producing silicon carbide ceramics comprising a silicon carbide ceramic substrate and a coating layer coating a surface of the silicon carbide ceramic substrate, the method comprising:
(A) dispersing at least a silicon carbide-forming raw material and a metal oxide in a dispersion medium;
(B) sintering a dispersion product obtained in step (A); and
(C) applying a coating layer precursor containing a metal oxide onto a surface of a sintered product obtained in step (B) and then heat-treating the sintered product and the coating layer precursor at a temperature equal to or higher than a eutectic temperature between silicon dioxide derived from the sintered product, the metal oxide derived from the sintered product, and the metal oxide derived from the coating layer precursor to convert the coating layer precursor to a coating layer containing a silicate.

### Step (A)

The production method of the present disclosure includes step (A) of dispersing at least a silicon carbide-forming raw material and a metal oxide in a dispersion medium.

Examples of the silicon carbide-forming raw material include SiC powder, silicon (Si) powder, carbon (C) powder, and carbon component-containing powder (e.g., a resin such as a phenolic resin), and preferred examples of the silicon carbide-forming raw material include SiC powder, Si powder, and C powder. These may be used singly or in combination of two or more of them, as appropriate. The particle diameters of these powders are not limited as long as the effects of the present disclosure are obtained, and may be those usually used in this field. Although not limiting the present disclosure, the average particle diameters of these powders are, for example, preferably about 0.02 to 50 um. It should be noted that the silicon carbide-forming raw material is commercially available, and the particle diameter of a commercially-available product is usually based on that described in the brochure of the commercially-available product. Further, for example, the type of SiC is not limited, either, and any type of SiC powder such as β-SiC powder that is cubic crystal powder or α-SiC powder that is hexagonal crystal powder may be used.

The metal oxide is not limited as long as it is an oxide of a metal, and preferred examples of the metal oxide include a rare-earth oxide represented by RE₂O₃ (RE denotes a rare-earth), an oxide of aluminum, and an oxide of hafnium. The metal oxide is the same as that described above in "1. Silicon carbide ceramics", and more preferred examples of the metal oxide include ytterbium oxide (Yb₂O₃), scandium oxide (Sc₂O₃), yttrium oxide (Y₂O₃), erbium oxide (Er₂O₃), lutetium oxide (Lu₂O₃), alumina (Al₂O₃), and hafnium oxide (HfO₂). Examples of the metal oxide include ytterbium oxide (Yb₂O₃), scandium oxide (Sc₂O₃), yttrium oxide (Y₂O₃), erbium oxide (Er₂O₃), lutetium oxide (Lu₂O₃), and alumina (Al₂O₃). These may be used singly or in combination of two or more of them. It should be noted that when added to a dispersion medium in step (1), the metal oxide is usually in the form of powder. The metal oxide to be used is preferably powder of a metal oxide stable in a use environment. The average particle diameter of powder of the metal oxide is, for example, but not limited to, preferably about 0.02 to 50 µm, more preferably about 0.02 to 30 µm, even more preferably about 0.02 to 10 µm. It should be noted that the metal oxide is commercially available, and the particle diameter of a commercially-available product is usually based on that described in the brochure of the commercially-available product.

Examples of the dispersion medium include water and organic solvents such as alcohols (e.g., ethanol and isopropanol). These may be used singly or in combination of two or more of them.

The dispersion product may contain any other components without impairing the effects of the present disclosure. Examples of the components include a sintering aid, etc. These may be used singly or in combination of two or more of them, and the content of each of the components may appropriately be determined according to intended use.

For example, the amount of the sintering aid in the dispersion product is, for example, about 0.1 to 25 parts by weight per 100 parts by mass of the total amount of the silicon carbide-forming raw material (powder) and the metal oxide (powder). The sintering aid to be added to the dispersion medium is in the form of powder. By adding the sintering aid, the dispersion product can be sintered even when a sintering temperature is low, which makes it possible for a sintered product to have fracture strength sufficient for a matrix. The sintering aid is, for example, B₄C. It should be noted that some of the above-mentioned metal oxides can serve also as a sintering aid, and examples of such a component include yttrium oxide (Y₂O₃), ytterbium oxide (Yb₂O₃), and alumina (Al₂O₃). Therefore, such a component may be added to a dispersion medium to serve also as a sintering aid.

The dispersion product can be obtained by mixing a dispersion medium, a silicon carbide-forming raw material, a metal oxide, and, if necessary, any other components. The form of the dispersion product is not limited, but is usually slurry (suspension).

The content of solid matter (e.g., a silicon carbide-forming raw material, a metal oxide, and a sintering aid added if necessary) in the dispersion product is not limited and may be set so that the dispersion product can easily be treated. The content of solid matter is, for example, preferably about 5 to 50 mass%, more preferably about 10 to 30 mass%. More preferably, the dispersion product contains, as solid matter, a silicon carbide-forming raw material and a metal oxide.

Although not limiting the present disclosure, the sintered product in the present disclosure is preferably produced by, for example, liquid phase sintering or reaction sintering.

When the sintered product is produced by liquid phase sintering, for example, it is preferred that SiC powder is used as a silicon carbide-forming raw material, and SiC powder and a metal oxide are dispersed in a dispersion medium. The amounts of the SiC powder and the metal oxide in the dispersion product are not limited but are, for example, preferably appropriately determined so that the contents of these components in the silicon carbide ceramic substrate constituting the silicon carbide ceramics produced by the method of the present disclosure are within their respective ranges described above in "1. Silicon carbide ceramics" with reference to the silicon carbide ceramic substrate.

When the sintered product is produced by reaction sintering, the silicon carbide-forming raw material to be used may preferably appropriately be selected from among SiC powder, Si powder, C powder, a carbon component-containing resin (a resin such as a phenolic resin), and the like. More preferably, the silicon carbide-forming raw material to be used is, for example, at least SiC powder and Si powder; Si powder and C powder; or SiC powder, Si powder, and C powder. For example, it is preferred that such a silicon carbide-forming raw material and a metal oxide are dispersed in a dispersion medium. The amounts of the silicon carbide-forming raw material and the metal oxide in the dispersion product are not limited, and are the same as described above.

### Step (B)

The production method of the present disclosure includes step (B) of sintering a dispersion product obtained in step (A).

The procedure of sintering in step (B) is not limited as long as the dispersion product can be sintered. For example, the sintering can be performed according to the procedure of liquid phase sintering or reaction sintering described below.

### · Liquid phase sintering

Sintering conditions are not limited as long as the dispersion product can be sintered. A sintering temperature is usually, for example, about 1400°C or higher. From the viewpoint of imparting higher fracture strength, the sintering temperature is, for example, preferably about 1700°C or higher. When a sintering aid is added to the dispersion product or a metal oxide useful as a sintering aid is added to the dispersion product, the sintering temperature can be set to be low and is, for example, about 1400°C or higher, preferably about 1600°C or higher, and sufficient fracture strength can be imparted. The upper limit of the sintering temperature may be set to the upper-limit temperature of the matrix (SiC), and is, for example, preferably about 2500°C. Therefore, the sintering temperature is, for example, preferably about 1400 to 2500°C. It should be noted that although not limiting the present disclosure, for example, when the sintering is performed in the presence of silicon carbide fiber, the sintering temperature may be about 1400 to 2000°C in consideration of heat resistance of the fiber. As just described, the sintering temperature can appropriately be determined according to ceramic fiber to be used.

A pressure during the sintering is not limited as long as a sintered product can be obtained. Usually, sufficient strength can be imparted to the matrix in a shorter time when the pressure is higher, and therefore the pressure during the sintering is, but not limited to, for example, about 5 MPa or more, and may be, for example, about 10 to 40 MPa. Although not limiting the present disclosure, for example, when the sintering is performed in the presence of ceramic fiber such as silicon carbide fiber, the pressure is, for example, preferably about 10 to 40 MPa, more preferably about 10 to 30 MPa.

Although not limiting the present disclosure, a sintering time is, for example, about 0.5 to 10 hours, preferably about 0.5 to 5 hours.

Although not limiting the present disclosure, an atmosphere during the sintering is, for example, an inert gas atmosphere such as nitrogen, argon, or helium, preferably an argon atmosphere or a nitrogen atmosphere.

### · Reaction sintering

Sintering conditions are not limited as long as the dispersion product can be sintered. As for sintering conditions, usually, the temperature is increased to the melting point of silicon or higher by heating so that Si and C in the dispersion product react to form SiC, thereby obtaining a sintered product containing SiC as a matrix. In the dispersion product, C powder is usually used as carbon component (C)-containing powder, but a resin that is carbonized at a temperature equal to or lower than the melting point of silicon, such as a phenolic resin, may be used. When powder of such a resin is used, in the step of increasing the temperature to the melting point of silicon or higher by heating, the resin is carbonized before the temperature reaches 1414°C that is the melting point of silicon, and then when the temperature reaches the melting point of silicon, a component obtained by carbonization of the resin and molten silicon react to form SiC. Si powder is used as an Si component. However, by adding SiC powder, the SiC powder serves as nuclei and SiC generated by the reaction grows around the nuclei. This makes it possible to improve the efficiency of forming the SiC matrix.

Alternatively, a silicon carbide-forming raw material other than Si (i.e., other than Si powder) may previously be added to the dispersion product, and in this case, the dispersion product is dried, if necessary, and Si powder (the amount thereof may be excessive) is applied to (e.g., sprinkled on) the dispersion product or the dried product. After the Si powder is applied, the temperature may be increased to the melting point of silicon or higher by heating so that powder of the silicon carbide-forming raw material present in the dispersion product or the dried product reacts with molten Si to form SiC. In this case, the amount of the Si powder to be applied may appropriately be determined by reference to, for example, the above-described content in the dispersion product.

Therefore, a sintering temperature may be set to be equal to or higher than about 1414°C that is the melting point of silicon, and is preferably about 1450°C or higher or about 1500°C or higher to impart sufficient fracture strength. The upper limit of the sintering temperature may be set to the upper-limit temperature of the SiC matrix, and is, for example, preferably about 2500°C. Therefore, the sintering temperature is, for example, preferably equal to or higher than the melting point of silicon and equal to or lower than about 2500°C. It should be noted that although not limiting the present disclosure, for example, when the sintering is performed in the presence of silicon carbide fiber, the sintering temperature may be about 1400 to 2000°C in consideration of heat resistance of the fiber. As just described, the sintering temperature can appropriately be determined according to ceramic fiber to be used.

Although not limiting the present disclosure, an atmosphere during the sintering is, for example, an inert gas atmosphere such as nitrogen, argon, or helium, and is, for example, preferably an argon atmosphere or a nitrogen atmosphere. If necessary, a pressure may be applied. When the pressure during the sintering is higher, sufficient strength can be imparted in a shorter time. The pressure may usually be about 5 MPa or higher, but may be, for example, about 10 to 40 MPa. Although not limiting the present disclosure, for example, when the sintering is performed in the presence of ceramic fiber such as silicon carbide fiber, the pressure is, for example, preferably about 10 to 40 MPa or about 10 to 30 MPa.

Although not limiting the present disclosure, irrespective of which of the methods is used to produce a sintered product, the dispersion product may be molded into a desired shape and dried before the sintering. A drying temperature and a drying time may appropriately be set. The drying may be performed in any atmosphere. For example, natural drying in the air or vacuum drying may be performed.

Although not limiting the present disclosure, irrespective of which of the methods is used to produce a sintered product, ceramic fiber may be arranged in the sintered product (silicon carbide ceramic substrate). The ceramic fiber is the same as that described above. In this case, the sintering is performed in such a manner as described above after the dispersion product and the ceramic fiber are mixed. The amount of the ceramic fiber to be added to the dispersion product is not limited, and may appropriately be set according to intended use. The content of the ceramic fiber in the sintered product is not limited, either. For example, the content of the ceramic fiber in the sintered product is preferably appropriately determined so that the content of the ceramic fiber in the silicon carbide ceramic substrate constituting the silicon carbide ceramics produced by the method of the present disclosure falls within the range described above in "1. Silicon carbide ceramics" with reference to the silicon carbide ceramic substrate. For example, the ceramic fiber is added to the dispersion product in such a manner that the content of the ceramic fiber in the substrate is 70 mass% or less.

The dispersion product and the ceramic fiber may be mixed according to any procedure. For example, the ceramic fiber (as described above, the ceramic fiber may be in any form such as a fiber bundle or a fiber structure) may be coated with the dispersion product, or the ceramic fiber may be immersed in the dispersion product. Alternatively, the ceramic fiber may be arranged in any shape in the dispersion product placed in a mold. For example, fiber bundles may be arranged in one direction, two intersecting directions, or any directions other than these. When the ceramic fiber is in a sheet shape, two or more sheets may be stacked on top of each other, sheets may be arranged to be perpendicular to each other, or respective sheets may be arranged in different directions. As described above, how the ceramic fiber is arranged in the dispersion product may appropriately be determined according to intended use.

The mixture of the dispersion product and the ceramic fiber may be dried before the sintering. A drying temperature, a drying time, an atmosphere, etc. may appropriately be set as described above.

The thus obtained dispersion product (mixed with the ceramic fiber) is sintered. This makes it easy to obtain silicon carbide ceramics comprising a silicon carbide ceramic substrate containing ceramic fiber, which is preferred from the viewpoint of further improving the fracture toughness of the silicon carbide ceramic substrate.

According to the present disclosure, a sintered product is obtained by sintering the dispersion product in such a manner as described above. On the surface of the sintered product, silicon dioxide (SiO₂) generated by oxidation of the sintered product is present.

### Step (C)

The production method of the present disclosure includes step (C) of applying a coating layer precursor containing a metal oxide onto a surface of a sintered product obtained in step (B) and then heat-treating the sintered product and the coating layer precursor at a temperature equal to or higher than a eutectic temperature between silicon dioxide derived from the sintered product, the metal oxide derived from the coating layer precursor, and the metal oxide derived from the sintered product to convert the coating layer precursor to a coating layer containing a silicate.

The coating layer precursor may be applied onto the entire surface of the sintered product or may be applied onto only part of the surface of the sintered product, either of which may appropriately be selected according to intended use.

The coating layer precursor contains a metal oxide. The metal oxide is the same as that described above in "1. Silicon carbide ceramics". As described above, the metal oxide is not limited as long as it is an oxide of a metal, and preferred examples of the metal oxide include a rare-earth oxide represented by RE₂O₃ (RE denotes a rare-earth), an oxide of aluminum, and an oxide of hafnium, and more preferred examples of the metal oxide include ytterbium oxide (Yb₂O₃), scandium oxide (Sc₂O₃), yttrium oxide (Y₂O₃), erbium oxide (Er₂O₃), lutetium oxide (Lu₂O₃), alumina (Al₂O₃), and hafnium oxide (HfO₂). As described above in "1. Silicon carbide ceramics", the metal oxide is, for example, preferably a metal oxide that is of the same type as the metal oxide used for the sintered product. These may be used singly or in combination of two or more of them.

The metal oxide contained in the coating layer precursor is usually in the form of powder, and the particle diameter thereof is the same as that described above. The content of the metal oxide in the coating layer precursor is also the same as that described above.

The coating layer precursor may contain any other components without impairing the effects of the present disclosure, and the other components are also the same as those described above. As described above, there is a case where the metal oxide can be used as a reaction aid, but in the present disclosure, the amount of the metal oxide is not included in the amount of a reaction aid.

Although not limiting the present disclosure, for example, the coating layer precursor preferably consists of a metal oxide, and more preferably consists of a rare-earth oxide and an oxide of aluminum or of a rare-earth oxide.

As described above, the coating layer precursor is in the form of powder (dried product). The coating layer precursor is applied onto the surface of the sintered product. The coating layer precursor may be formed by applying a powdery material (coating layer precursor) or by applying a material prepared in the form of slurry to enhance handleability (coatability) and then drying the material to obtain a powdery coating layer precursor. Therefore, the coating layer precursor at the start of heat treatment in step (C) is in the form of powder.

How the coating layer precursor is applied onto the surface of the sintered product is not limited as long as the coating layer precursor comes into contact with the surface of the sintered product. Although not limiting the present disclosure, for example, the coating layer precursor is attached to the surface of the sintered product by, for example, sprinkling the coating layer precursor in the form of powder onto the surface of the sintered product, pressing the sintered product into the coating layer precursor in the form of powder, coating the surface of the sintered product with the coating layer precursor in the form of powder, or burying the sintered product in the coating layer precursor. The amount of the coating layer precursor to be applied is not limited, either as long as a desired coating layer is obtained. For example, the amount of the coating layer precursor in the form of powder to be applied is 0.01 to 0.5 g, more preferably 0.05 to 0.75 g per square centimeter of the surface of the sintered product on which a coating layer needs to be formed.

After the coating layer precursor is applied onto the surface of the sintered product, the sintered product and the coating layer precursor are heat-treated at a temperature equal to or higher than a eutectic temperature between silicon dioxide derived from the sintered product, the metal oxide derived from the coating layer precursor, and the metal oxide derived from the sintered product. On the surface of the sintered product, silicon dioxide generated by oxidation of the sintered product is present. The silicon dioxide derived from the sintered product means silicon dioxide present in the sintered product, especially silicon dioxide present on the surface of the sintered product onto which the coating layer precursor is applied. The metal oxide derived from the sintered product means a metal oxide contained in the sintered product. The metal oxide derived from the coating layer precursor means a metal oxide contained in the coating layer precursor.

As described above, the heat treatment at a temperature equal to or higher than a eutectic temperature is not limited as long as a eutectic reaction between silicon dioxide and the metal oxides occurs. The eutectic temperature depends on the types of metal oxides, and therefore may appropriately be determined depending on the types of metal oxides to be used. Although not limiting the present disclosure, the eutectic temperature derived from the state diagram or the like of metal oxides to be used is, for example, -50°C to +200°C, preferably about -50°C to +100°C.

It should be noted that in the eutectic reaction between the metal oxide derived from the sintered product and the silicon dioxide, all the metal oxide present in the sintered product does not need to react with the silicon dioxide. For example, the metal oxide has characteristics such that it diffuses to the surface of the sintered product by heating at high temperature. Therefore, in the present disclosure, the eutectic reaction between the metal oxide derived from the sintered product and the silicon dioxide means a reaction that occurs on the surface of the sintered product.

Although not limiting the present disclosure, a heat treatment time is, for example, about 0.5 to 100 hours, preferably about 0.5 to 50 hours, more preferably about 1 to 20 hours.

Although not limiting the present disclosure, an atmosphere during the heat treatment is, for example, an air atmosphere or a water vapor atmosphere, preferably an air atmosphere.

By performing the heat treatment in such a manner as described above, the coating layer precursor is converted to a coating layer containing a silicate. Specifically, a coating layer is obtained which contains a silicate that is a product of a eutectic reaction between silicon dioxide derived from the sintered product (silicon carbide ceramic substrate), the metal oxide derived from the coating layer precursor, and the metal oxide derived from the sintered product.

As described above, in the present disclosure, the silicate forming the coating layer is derived from the coating layer precursor and the sintered product. The silicate is the same as that described above in "1. Silicon carbide ceramics".

In this way, the silicon carbide ceramics of the present disclosure can be produced which comprises a silicon carbide ceramic substrate and a coating layer coating the surface of the silicon carbide ceramic substrate.

It should be noted that although not limiting the present disclosure, the sintered product obtained in step (B) may further be heated before the eutectic reaction. The step of heating the sintered product before the eutectic reaction is defined as step (C') .

A heating temperature in step (C') is, for example, about 1000 to 1600°C, preferably about 1150 to 1500°C. The main purpose of the heating is to further generate SiO₂ on the surface of the sintered product obtained in step (B), and therefore the heating is performed in an oxidative atmosphere. The oxidative atmosphere is, for example, an air atmosphere or a water vapor atmosphere, preferably an air atmosphere. Although not limiting the present disclosure, a heating time is, for example, about 10 minutes to 10 hours, preferably about 15 minutes to 3 hours.

When step (C') is performed to further generate SiO₂ on the surface of the sintered product, the coating layer precursor is then applied onto the surface of the sintered product obtained in step (C'), and the sintered product and the coating layer precursor are heat-treated, a eutectic reaction between SiO₂ and the metal oxides is promoted on the surface, which makes it possible to more easily produce silicon carbide ceramics including a coating layer having an increased thickness and high compactness. It should be noted that when step (C) is performed after step (C'), the eutectic reaction may be performed in an oxidative atmosphere or an inert atmosphere, but is preferably performed in an oxidative atmosphere.

In this way, the silicon carbide ceramics of the present disclosure can be produced. In the silicon carbide ceramics, the content of the silicate in the coating layer is 80 vol% or more, and a preferred content of the silicate is the same as that described above in "1. Silicon carbide ceramics". It can be said that when the content of the silicate is higher, the compactness of the coating layer is higher. The production method of the present disclosure makes it possible to significantly reduce the SiO₂ content in the coating layer and increase the silicate content in the coating layer. Therefore, silicon carbide ceramics produced by the method can be said to be useful in terms of the fact that surface deterioration is prevented in a high-temperature oxidative environment.

The thickness of the coating layer is not limited, either. The thickness is, for example, preferably 5 um or more, and a more preferred thickness is the same as that described above in "1. Silicon carbide ceramics".

Although not limiting the present disclosure, the coating layer is, for example, preferably one having a silicate content of 80 vol% or more and a thickness of 5 µm or more, more preferably one having a silicate content of 90 to 100 vol% and a thickness of 10 to 100 µm, one having a silicate content of 80 to 100 vol% and a thickness of 10 to 150 µm, one having a silicate content of 80 to 98 vol% and a thickness of 10 to 150 µm, or one having a silicate content of 80 to 98 vol% and a thickness of 10 to 120 µm. The content and the thickness are the same as those described above. Preferably, the content and the thickness may appropriately be adjusted to fall within their respective ranges described above.

Features of the coating layer and the silicon carbide ceramics other than those described above are the same as those described above in "1. Silicon carbide ceramics".

The present disclosure makes it possible to obtain silicon carbide ceramics capable of further preventing its surface deterioration. Further, the present disclosure makes it possible, even when ceramic fiber is contained, to obtain silicon carbide ceramics in which an interface layer is not present between a SiC matrix and the ceramic fiber. Therefore, even when ceramic fiber is contained in the matrix, it is possible to easily obtain silicon carbide ceramics capable of further preventing its surface deterioration.

In the silicon carbide ceramics of the present disclosure, as described above, the silicate forming the coating layer is derived from the coating layer precursor and the sintered product and is generated by a eutectic reaction between the metal oxide derived from the coating layer precursor, the metal oxide derived from the sintered product, and silicon dioxide derived from the surface of the sintered product, and therefore silicon dioxide, which is likely to stay between the coating layer and the sintered product (substrate), is significantly prevented from remaining. This means that the coating layer and the substrate can tightly be integrated with each other, that is, silicon carbide ceramics having more excellent durability can be provided.

As can be seen from Examples that will be described later, also in terms of the fact that gas is less likely to remain in the coating layer, the present disclosure makes it possible to provide silicon carbide ceramics having a coating layer excellent in compactness.

### Examples

Hereinbelow, the embodiments of the present disclosure will more specifically be described with reference to examples, but are not limited to the following examples.

### Test Example 1

### 1. Production procedures of silicon carbide ceramics

### 1-1) Production of sintered product

Powder (SiC powder: 80 mass%, Yb₂O₃ powder: 17 mass%, Al₂O₃ powder: 3 mass%) and a dispersion medium (ethanol) were mixed in a mass ratio of 1 : 4 to obtain a dispersion product. The obtained dispersion product was placed in a mold, naturally dried, and then sintered in an argon atmosphere under heating conditions of 20 MPa, 1890°C and 1 hour to obtain a sintered product. The SiC powder (manufactured by FUJIMI INCORPORATED under the trade name of GC40000), the Yb₂O₃ powder (manufactured by Kojundo Chemical Laboratory Co., Ltd. under the trade name of Yb₂O₃), and the Al₂O₃ powder (manufactured by Kojundo Chemical Laboratory Co., Ltd. under the trade name of α-Al₂O₃) used in this test example respectively had an average particle diameter of 0.27 µm, an average particle diameter of 1 µm, and an average particle diameter of 1 µm.

### 1-2) Formation of coating layer using coating layer precursor

The thus obtained sintered product was buried in a coating layer precursor to apply the coating layer precursor onto the surface of the sintered product. It was estimated that the amount of the coating layer precursor applied corresponded to 50 mg per square centimeter of the sintered product. As the coating layer precursor, a powder mixture containing 85 mass% of Yb₂O₃ and 15 mass% of Al₂O₃ was used. The same powders as those used for producing the sintered product were used. Then, the sintered product with the coating layer precursor was heated in an air atmosphere for 18 hours at a temperature (1430°C) at which a eutectic reaction between silicon dioxide (SiO₂) derived from the sintered product and Yb₂O₃ and Al₂O₃ derived from the coating layer precursor and the sintered product occurred to form a silicate (Yb₂Si₂O₇) as a product of the eutectic reaction so that the coating layer precursor was converted to a coating layer containing the silicate. In this way, silicon carbide ceramics (Example 1) comprising a silicon carbide ceramic substrate (sintered product) and a coating layer coating the surface of the silicon carbide ceramic substrate was obtained.

As a comparative example, silicon carbide ceramics (Comparative Example 1) was obtained by sintering a dispersion product prepared in the same manner as described above under heating conditions of 1890°C, 20 MPa, and 1 hour to produce a sintered product and then further heat-treating the obtained sintered product in an air atmosphere at 1430°C for 18 hours without using the coating layer precursor to form a surface modification layer containing a silicate on the sintered product.

### 2. Results

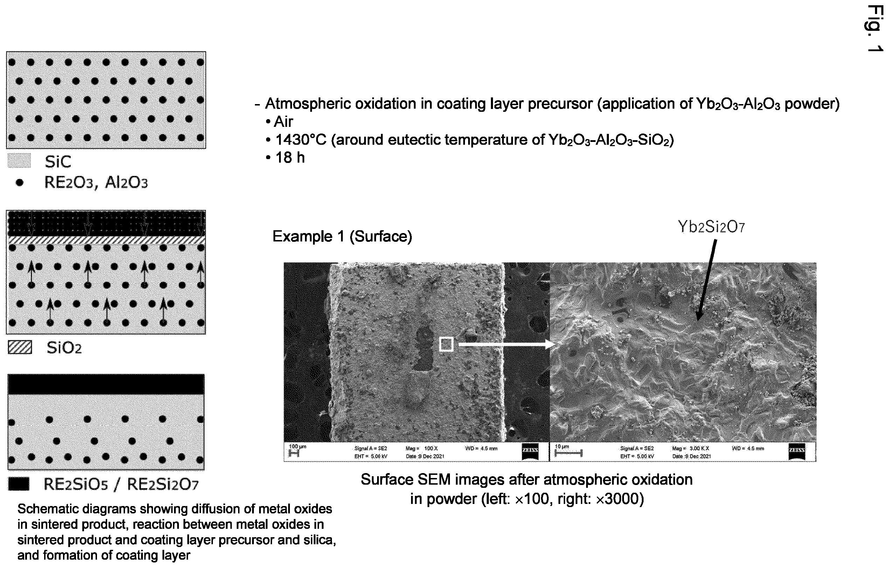

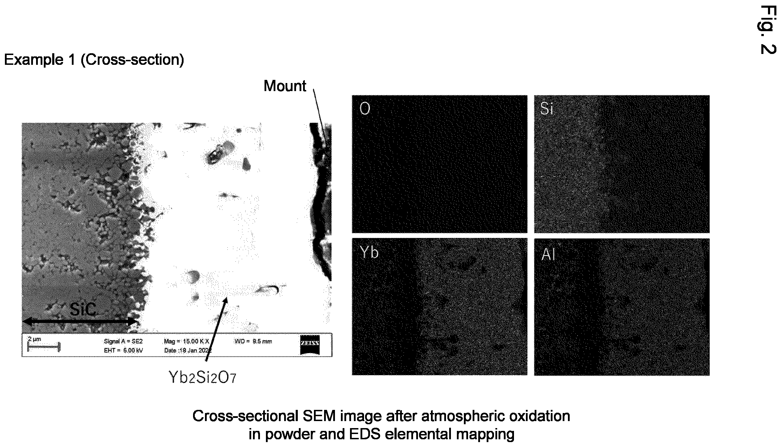

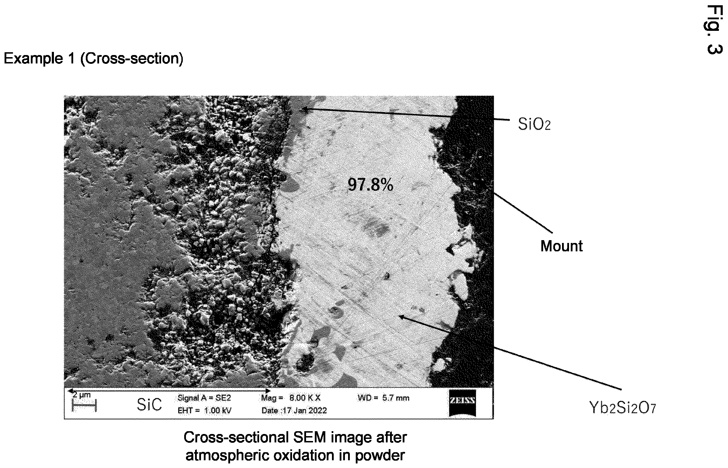

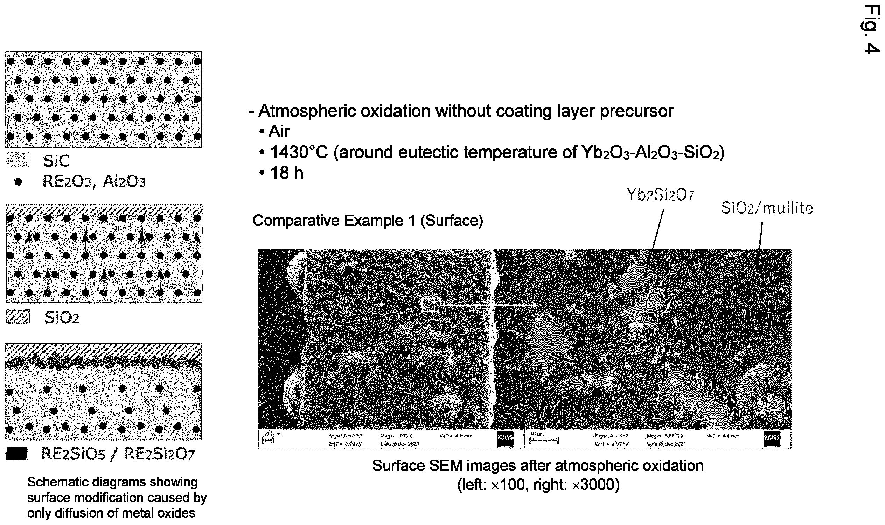

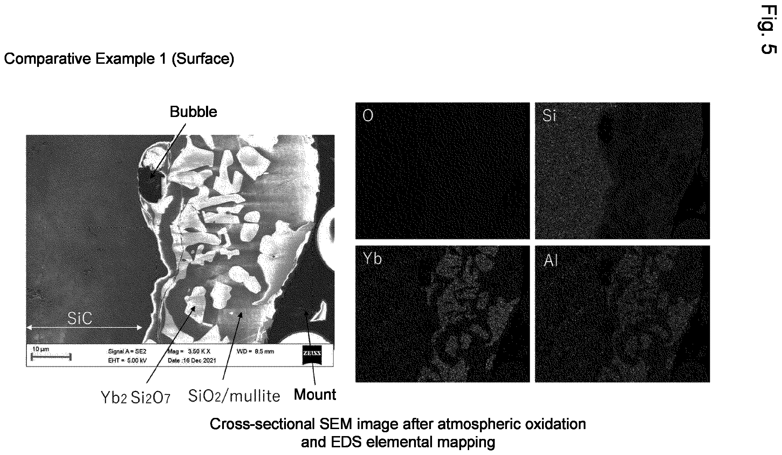

Fig. 1 shows schematic diagrams of production process of silicon carbide ceramics (Example 1) and scanning electron microscope (SEM) images of surface of the silicon carbide ceramics (Example 1). Fig. 1 shows schematic diagrams showing diffusion of metal oxides in the sintered product, a reaction between the metal oxides in the sintered product and the coating layer precursor and silica, and formation of the coating layer, and surface SEM images after atmospheric oxidation in the powder (coating layer precursor). Fig. 2 shows a SEM image of cross-section of the silicon carbide ceramics (Example 1) (left) and the result of elemental mapping by energy dispersive X-ray spectroscopy (EDS) (right). Fig. 3 shows a SEM image of cross-section of the silicon carbide ceramics (Example 1). The SEM images and the elemental mapping results by EDS were obtained according to procedures described in manuals. Fig. 4 shows schematic diagrams of production process of silicon carbide ceramics (Comparative Example 1) and SEM images of surface of the silicon carbide ceramics (Comparative Example 1). Fig. 4 shows schematic diagrams of surface modification caused only by diffusion of metal oxides and a surface SEM image after atmospheric oxidation. Fig. 5 shows a SEM image of cross-section of the silicon carbide ceramics (Comparative Example 1) (left) and the result of EDS (right).

As shown in Fig. 1, it was found that in the case of the silicon carbide ceramics of Example 1, the coating layer obtained by applying the coating layer precursor and causing the eutectic reaction to occur according to the above procedures had a high content of Yb₂Si₂O₇ formed as a product of the eutectic reaction. It was also found that the SiO₂ content in the coating layer was significantly low. Further, as can be seen also from the cross-section of the obtained silicon carbide ceramics shown in Fig. 2, Yb₂Si₂O₇ as a product of the eutectic reaction was efficiently formed. Also from the results shown in Fig. 2, it was found that the coating layer had a high content of Yb₂Si₂O₇. It should be noted that in Fig. 2, since the region of the silicon carbide ceramic substrate (matrix) is mainly composed of SiC, Si is hard to visually be observed in the region of the coating layer due to low intensity of Si. However, from the result of point analysis by EDS and the result of XRD, it was confirmed that a region overlapping with the region of Yb in the coating layer corresponded to Yb₂Si₂O₇. Further, as shown in Fig. 3, the silicate (Yb₂Si₂O₇) content in the coating layer was 97.8 vol%. It can be said that when the silicate content is higher, the compactness of the coating layer is higher. Also from this, it can be seen that the SiO₂ content in the coating layer used in the present disclosure is significantly low. From this, it can be said that the silicon carbide ceramics of Example 1 can be prevented from undergoing surface deterioration in a high-temperature oxidative environment, that is, the silicon carbide ceramics of Examples 1 is very excellent in preventing surface deterioration.

It should be noted that in this test example, the silicate (Yb₂Si₂O₇) content in the coating layer was calculated in the following manner. The composition in the coating layer was analyzed by observation of cross-sectional image of the coating layer with a scanning electron microscope and elemental mapping using energy dispersive X-ray spectroscopy (Model Ultra 55, manufactured by Zeiss) to identify the silicate in the coating layer, and the thickness of the coating layer (the distance from the surface of the sintered product to the surface of the coating layer) was measured at any position in the cross-sectional image. A square was drawn which had one side defined by a portion where the thickness was measured and another side defined by a straight line having the same length as the thickness and being parallel to the surface of the silicon carbide ceramic substrate in the cross-sectional image. The percentage of volume of the silicate in the coating layer in the square was calculated from image analysis. In the same manner, the percentage of volume of the silicate in the coating layer in the square was calculated at any other position from image analysis. The average of the percentages obtained at two positions in such a manner was defined as the percentage of volume of the silicate in the coating layer constituting the silicon carbide ceramics of Example 1. It should be noted that the phrase "distance from the surface of the sintered product to the surface of the coating layer" can be said to be the same in meaning as the above-described phrase "direction (perpendicular to the substrate surface) in which the coating layer is formed on the substrate".

On the other hand, in the case of the silicon carbide ceramics of Comparative Example 1, as shown in Figs. 4 and 5, the silicate was poorly formed, and the silicate content in the coating layer was 35 vol%. As just described, in the case of the silicon carbide ceramics of Comparative Example 1 produced without using the coating layer precursor, the coating layer had a low silicate content, that is, had low compactness. It was found that in Comparative Example 1, SiO₂/mullite was generated faster and therefore the surface of the sintered product could not be coated with Yb₂Si₂O₇. It should be noted that the silicon carbide ceramics of Comparative Example 1 had a coating layer thickness of 20 um or less.

Further, as can be seen from Fig. 5, in Comparative Example 1, many holes (spaces) were formed by bubbles (gas (carbon dioxide)) generated during oxidation. On the other hand, as can be seen from Fig. 3 etc., in Example 1, substantially no hole formed by gas was observed. The reason for this is considered as follows. Although carbon dioxide was generated during generation of silicon dioxide, release of the gas was promoted by softening of the surface due to promotion of the eutectic reaction, and therefore the gas was less likely to remain.

From these, it was understood that by applying a coating layer precursor onto a sintered product and then heat-treating the sintered product and the coating layer precursor under oxidative conditions at a temperature equal to or higher than a eutectic temperature between SiO₂ derived from the sintered product, a metal oxide derived from the coating layer precursor, and a metal oxide derived from the sintered product, the coating layer precursor could be converted to a coating layer having a high silicate content, which made it possible to easily produce silicon carbide ceramics including a coating layer having a high silicate content. That is, it could be understood that silicon carbide ceramics including a coating layer having high compactness could easily be obtained. It should be noted that the silicon carbide ceramics of Example 1 had a coating layer thickness of 15 µm. The thickness of the coating layer was determined as follows. The composition in the coating layer was analyzed by observation of cross-sectional image of the coating layer with a scanning electron microscope and elemental mapping using energy dispersive X-ray spectroscopy to identify the coating layer, the thickness of the coating layer was measured at any 10 positions on the image, and the average of measured values was defined as the thickness of the coating layer constituting the silicon carbide ceramics of Example 1.

### Test Example 2

### 1. Production procedures of silicon carbide ceramics

A sintered product was obtained in the same manner as in Example 1 in Test Example 1. The obtained sintered product was further heated in an air atmosphere at 1250°C for 20 minutes. After the heating, a coating layer precursor was applied on to the surface of the obtained sintered product in the same manner as in Example 1. It should be noted that in this test example, as the coating layer precursor, a powder mixture containing 85 mass% of Yb₂O₃ and 15 mass% of Al₂O₃ was used. Then, the sintered product with the coating layer precursor was heated in an air atmosphere for 15 hours at a temperature (1484°C) higher than that in Test Example 1 to convert the coating layer precursor to a coating layer containing a silicate (Yb₂Si₂O₇) as a product of a eutectic reaction. In this way, silicon carbide ceramics (Example 2) comprising a silicon carbide ceramic substrate derived from the sintered product and a coating layer coating the surface of the silicon carbide ceramic substrate was obtained.

### 2. Results

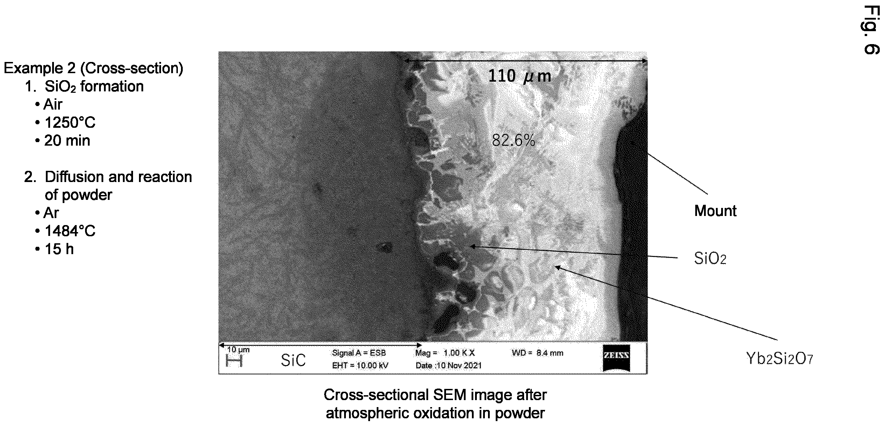

The result is shown in Fig. 6. Fig. 6 is a cross-sectional SEM image after atmospheric oxidation in the powder. As shown in Fig. 6, the silicate content in the coating layer of the obtained silicon carbide ceramics was 82.6 vol%. The coating layer had a thickness of 110 µm. From this, it was found that as in the case of Example 1, the coating layer of the silicon carbide ceramics of Example 2 also had high compactness. As just described, the coating layer of the silicon carbide ceramics of Example 2 was thicker than that of the silicon carbide ceramics of Example 1. From this, the silicon carbide ceramics of Example 2 can also be said to be very excellent in preventing surface deterioration.

It should be noted that the main reason why the coating layer of the silicon carbide ceramics of Examples 2 was thicker than that of the silicon carbide ceramics of Example 1 was considered to be that a larger amount of SiO₂ was formed and a larger amount of the silicate was generated by conversion by performing the heat treatment at a higher temperature than Example 1.

From consideration based on the result, it could be understood that a larger amount of SiO₂ was formed on the surface of the sintered product when only oxidation is performed at high temperature without applying the coating layer precursor after the production of the sintered product. It was supposed that this might cause surface deterioration of the sintered product (ceramics).

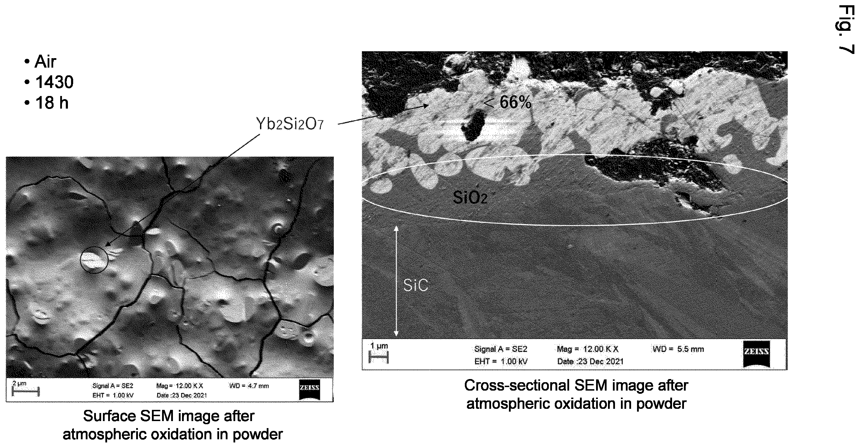

It should be noted that silicon carbide ceramics (Comparative Example 2) was produced by applying a coating layer precursor onto the surface of a SiC matrix (a silicon carbide ceramic substrate produced by chemical vapor deposition (CVD)), which was produced without using a metal oxide, in the same manner as in Example 1 described above and heat-treating the SiC matrix and the coating layer precursor in an air atmosphere. As a result, in the silicon carbide ceramics of Comparative Example 2, Yb₂Si₂O₇ was generated by a eutectic reaction between SiO₂ derived from the surface of the matrix and the metal oxides derived from the coating layer precursor, but SiO₂ remained between the thus formed Yb₂Si₂O₇ and the SiC matrix, thus resulting in low compactness (Fig. 7, less than 66 vol%). Fig. 7 shows a surface SEM image after atmospheric oxidation in the powder. The reason for this was considered to be that there was no metal oxide in the SiC matrix, and therefore diffusion of a metal oxide from the inside of the matrix did not occur so that a eutectic reaction between a metal oxide derived from the matrix (substrate) and SiO₂ derived from the surface of the matrix did not occur.

## Claims

1. Silicon carbide ceramics comprising a silicon carbide ceramic substrate and a coating layer coating a surface of the silicon carbide ceramic substrate, wherein
(1) the coating layer contains a silicate that is a product of a eutectic reaction between silicon dioxide derived from the silicon carbide ceramic substrate, a metal oxide derived from the silicon carbide ceramic substrate, and a metal oxide derived from a coating layer precursor, and
(2) a content of the silicate in the coating layer is 80 vol% or more.

2. The silicon carbide ceramics according to claim 1, wherein each of the metal oxides is at least one selected from the group consisting of scandium oxide (Sc₂O₃), yttrium oxide (Y₂O₃), erbium oxide (Er₂O₃), ytterbium oxide (Yb₂O₃), alumina (Al₂O₃), hafnium oxide (HfO₂), and lutetium oxide (Lu₂O₃).

3. The silicon carbide ceramics according to claim 1 or 2, wherein the coating layer has a thickness of 10 µm or more.

4. The silicon carbide ceramics according to any one of claims 1 to 3, wherein the silicon carbide ceramic substrate contains ceramic fiber.

5. A method for producing silicon carbide ceramics comprising a silicon carbide ceramic substrate and a coating layer coating a surface of the silicon carbide ceramic substrate, the method comprising:
(A) dispersing at least a silicon carbide-forming raw material and a metal oxide in a dispersion medium;
(B) sintering a dispersion product obtained in step (A); and
(C) applying a coating layer precursor containing a metal oxide onto a surface of a sintered product obtained in step (B) and then heat-treating the sintered product and the coating layer precursor at a temperature equal to or higher than a eutectic temperature between silicon dioxide derived from the sintered product, the metal oxide derived from the sintered product, and the metal oxide derived from the coating layer precursor to convert the coating layer precursor to a coating layer containing a silicate.

6. The method for producing silicon carbide ceramics according to claim 5, wherein each of the metal oxides is at least one selected from the group consisting of scandium oxide (Sc₂O₃), yttrium oxide (Y₂O₃), erbium oxide (Er₂O₃), ytterbium oxide (Yb₂O₃), alumina (Al₂O₃), hafnium oxide (HfO₂), and lutetium oxide (Lu₂O₃).

7. The method for producing silicon carbide ceramics according to claim 5 or 6, wherein the coating layer has a thickness of 10 µm or more.
